# EUROPEAN PATENT APPLICATION

(11) **EP 3 570 486 A1**
(43) Date of publication of application: **20.11.2019**
(21) Application number: 18305619.1
(22) Date of filing: 18.05.2018
(51) Int. Cl.: H04L 9/08, H04L 29/06, H04L 9/32

(54) **APPARATUS AND METHOD FOR PROVIDING A USER WITH CONFIRMATION INFORMATION**

(71) Applicant: InterDigital CE Patent Holdings, 75017 Paris (FR)
(72) Inventor: KLOCHKO, Igor, 2650 Edegem (BE); BEHLOUL, Younes, 3010 Kessel-lo (BE)
(74) Representative: Ståhl, Björn Niclas

(57) **Abstract**

An apparatus (110) connected to a first communication device (120) through a second interface (112) performs, via a first interface (111), a key exchange protocol with a second apparatus (140) to obtain (S230) confirmation information to be rendered to a user and sends (S240) the confirmation information as a caller ID to a first communication device (120) for display on a display (121) of the first communication device (120) thus enabling a user to verify that the confirmation information matches confirmation information displayed by the second apparatus to a further user. In a variant, the confirmation is sent to the first communication device (120) as a synthesized voice message. The apparatus (110) can be a gateway or a computer. The key exchange protocol can be performed during the negotiation of a secure VoIP protocol such as ZRTP.

## Description

### TECHNICAL FIELD

The present disclosure relates generally to Voice over IP (VoIP) and in particular to key exchange in certain VoIP systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

VoIP can be a convenient way for users to communicate. However, since data representing the communication passes via Internet Protocol (IP) networks, it can be possible for third parties to eavesdrop as commonly used VoIP protocols such as Session Initiation Protocol (SIP), Real-time Transport Protocol (RTP) and RTP Control Protocol (RTCP) do not provide encryption.

Several encryption solutions have been proposed to solve this problem.

Governmental and military organizations typically use at least one of so called secure voice and secure IP, but this generally requires equipment that may not be available to ordinary users and it may require that the same kind of equipment is used at both ends.

In addition, while some secure IP phones are available to the general public, such phones tend to be expensive, complicated to set up and use, and they may also lack conventional phone features expected by users.

Another solution is a softphone, i.e. a computer with specific VoIP software, as most conventional softphones provide encryption, but these require installation that can be difficult for the average user and it is not always convenient to communicate via a computer that tends to be located in a specific place and thus not easily portable.

A further solution is to use specific VoIP protocols that do provide encryption, such as Secure Real-time Transport Protocol (SRTP) and Z Real-time Transport Protocol (ZRTP).

In ZRTP, described in Internet Engineering Task Force (IETF) RFC 6189, an example connection between two ZRTP compatible devices is established as follows:
- Alice calls Bob, each using a VoIP enabled device.
- The devices negotiate the protocol, protocol version and encryption algorithm to use after the connection is made.
- The devices generate a shared key.
- A Short Authentication String (SAS) is presented to both Alice and Bob and they compare the presented strings, for example verbally.

If the strings match, it means that the established connection is secure and there is no man-in-the-middle that can modify the communication over the connection.

A problem with ZRTP can appear when it is implemented on for example a gateway, since gateways typically lack displays. Alternatively, even if the gateway has a display for presenting the SAS, gateways typically tend to be located in out-of-the-way places, which can mean that it is inconvenient for the user to read the SAS.

It will thus be appreciated that there is a desire for a solution that addresses at least some of the shortcomings of VoIP protocols that include key exchanges requiring user comparison of confirmations such as a SAS. The present embodiments provide such a solution.

### SUMMARY OF DISCLOSURE

A first aspect is directed to an apparatus including a first interface configured for communication with a second apparatus, a second interface configured for communication with a first communication device, and at least one processor configured to perform a key exchange protocol with the second apparatus, the key exchange protocol resulting in confirmation information, and send to the first communication device the confirmation information as information to be rendered by the first communication device.

A second aspect is directed to a method performed by at least one processor of an apparatus, including obtaining confirmation information to be displayed to a user through a key exchange protocol performed with a second apparatus, and sending to a first communication device connected to the apparatus, the confirmation as information to be rendered by the first communication device.

A third aspect is directed to a computer program comprising program code instructions executable by a processor for implementing the steps of a method according to any embodiment of the second aspect.

A fourth aspect is directed to a non-transitory computer readable medium storing program code instructions that, when executed by a processor, implement the steps of a method according to any embodiment of the second aspect.

### BRIEF DESCRIPTION OF DRAWINGS

Features of the present embodiments will now be described, by way of nonlimiting example, with reference to the accompanying drawings, in which:
Figure 1 illustrates an embodiment of a system; and
Figure 2 illustrates an embodiment of a method.

### DESCRIPTION OF EMBODIMENTS

According to the embodiments, a first apparatus, such as a gateway or a computer, connected to a first communication device performs a key exchange protocol, for example a secure VoIP protocol such as ZRTP, with a second apparatus to obtain a confirmation to be displayed (or rendered another way) to a first user. The first apparatus sends the confirmation to the first communication device to be rendered to the first user to enable the first user to verify that the confirmation matches a confirmation rendered by the second apparatus to a second user. The confirmation can for example be sent as a caller ID for display on a display of the first communication device or as a synthesized voice message.

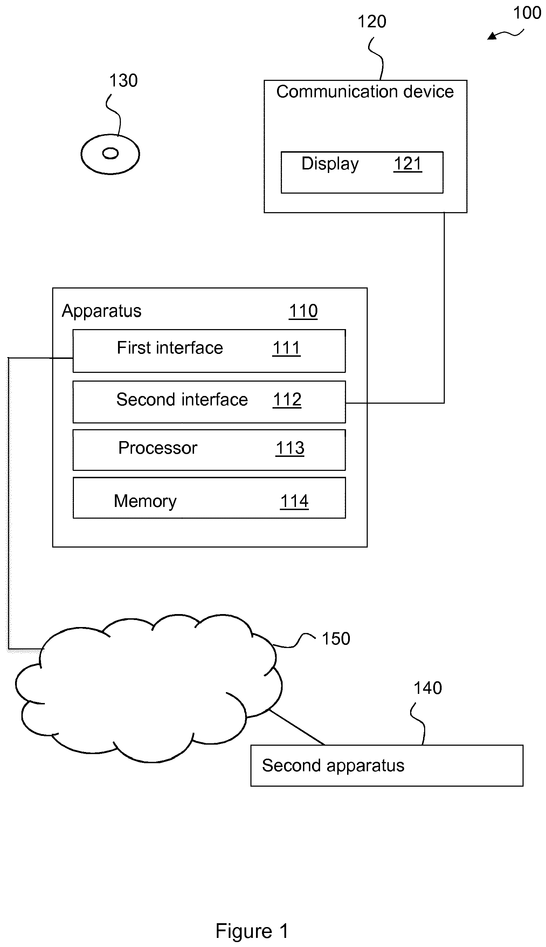

Figure 1 illustrates an embodiment of a system 100. The system 100 includes a first apparatus 110 and a first communication device 120 connected through a wired or wireless connection to the first apparatus 110. The first apparatus 110 can be, for example, a gateway used in a home network, or a computer controlling a FXS (Foreign Exchange Station), or DECT (Digital Enhanced Cordless Telecommunications) telephone, such as a PC with a DECT to USB adaptor. The first communication device 120 can be, for example, a conventional FXS or DECT telephone or any other conventional telephone that can be connected to the device 110 and is capable of displaying information such as caller ID. A person skilled in the art will appreciate that a FXS telephone is connected by wire while a DECT telephone typically uses a wireless connection and that their caller ID presentations protocols are different. Either interface or display protocol or format is applicable to the present disclosure.

The first apparatus 110 includes a first interface 111, for example an IP interface, configured for connection with the second apparatus 140 through an external network 150, such as the Internet or other IP network as is well known in the art, a second interface 112 configured for connection with the first communication device 120, at least one hardware processor 113 ("processor"), and memory 114 configured to store data and program code instructions that, when executed by the processor 113, perform an embodiment of a method of the present disclosure.

The first apparatus 110 can use a first communication protocol for communication such as VoIP with the second apparatus 140 and a second communication protocol such as DECT with the first communication device 120. In other words, the first apparatus 110 can be a terminal for both communication protocols and translate between these communication protocols.

The first communication device 120 includes a display 121 configured for displaying information such as caller ID.

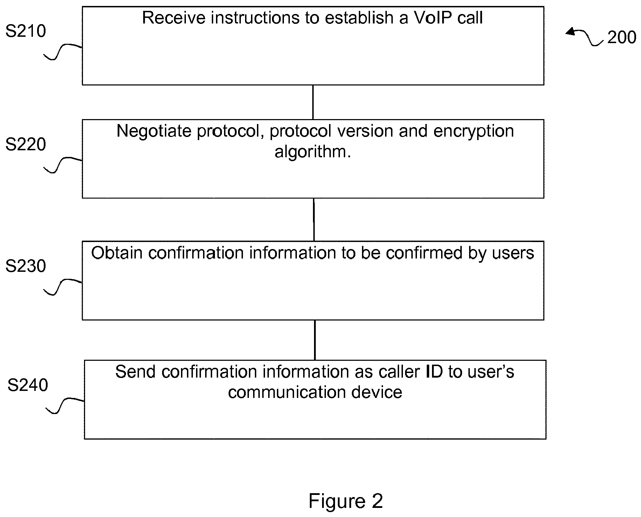

Non-transitory storage media 130 stores (i.e. tangibly embodies) instructions of a program that, when executed by processor 113 of the first apparatus 110, perform the functions further described hereinafter with reference to Figure 2.

Figure 2 illustrates an embodiment of a method 200 (with reference also made to Figure 1).

In step S210, the first apparatus 110 receives one or more commands from the first communication device 120 to establish a VoIP call with the second apparatus 140 using a protocol involving a key exchange such as ZRTP. The skilled person will appreciate that the following steps may also be performed in response to an incoming VoIP call.

In step S220, the processor 113 negotiates, via the first interface 111, the protocol, protocol version and encryption algorithm to use with the second apparatus 140.

In step S230, the processor 113 generates a key shared with the second apparatus 140 and obtains confirmation information such as the key or, in the case of ZRTP, a Short Authentication String (SAS), that is to be confirmed by the first and second users involved in the VoIP call.

In step S240, the processor 113 sends the confirmation information to the first communication device 120 via the second interface 112, as if the confirmation information were a caller ID (or other information that will be displayed on the display 121). To do so, the processor 113 translates, if necessary, the confirmation information into a suitable format, for example a set of symbols that can be displayed to the first user and that the first and second users can convey verbally, such as a set of alphanumeric characters or a set of digits. As is known, the SAS respects these requirements and may thus be sent to the first communication device 120 as is. The processor 113 can also cause the first communication device 120 to play specific tones or a specific ring signal to inform the first user that the information should be shared by the first and second users to confirm that the connection is secure.

The information may be sent to the first communication device 120 using conventional technologies for transmitting information such as caller ID for display on the display 121 of the first communication device 120, such as for example Frequency-Shift Keying (FSK) that is commonly used to transmit caller ID.

The first user can then confirm that the confirmation information displayed on the display 121 matches confirmation information rendered to the second user by verbally conveying, using the connection provided via the first apparatus 110, the confirmation information rendered to the second user (or vice versa). The verbal confirmation verifies that the conveyed confirmation information rendered by the first communication device 120 matches the confirmation information rendered by the second apparatus 140 to the second user, or vice versa.

It will also be appreciated that the present embodiments readily extend to other protocols that require users to confirm a shared key or other kinds of confirmations.

It will thus be appreciated that the present embodiments can provide a way to present, in a system using a protocol involving key exchange, a confirmation for a first user to confirm with a second user.

In a variant embodiment, the first communication device 120 does not display the confirmation information to the user (and thus does not need a display) but provides another way of providing the confirmation information to the user. The device 110 can, for example, instruct the first communication device 120 to play specific tones to be compared, over the established connection, with tones played to the other user. The device can also generate an audio signal with the confirmation information, for example using synthesized voice so that the user can repeat the confirmation to the other user (or verify that the confirmation provided by the other user matches the voiced confirmation).

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the embodiments of the present disclosure. It will thus be appreciated that those skilled in the art will be able to devise various arrangements that, although not explicitly described or shown herein, are included within its scope.

All examples and conditional language recited herein are intended for educational purposes to aid the reader in understanding the disclosure and the concepts contributed by the inventor to furthering the art, and are to be construed as being without limitation to such specifically recited examples and conditions.

Moreover, all statements herein reciting aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. An apparatus comprising:
a first interface configured for communication with a second apparatus;
a second interface configured for communication with a first communication device;
at least one processor configured to:
perform a key exchange protocol with the second apparatus, the key exchange protocol resulting in confirmation information; and
send to the first communication device the confirmation information as information to be rendered by the first communication device.

2. The apparatus of claim 1, wherein the confirmation information is sent as a caller ID for display on a display of the first communication device.

3. The apparatus of claim 1, wherein the confirmation information is sent as synthesized voice to be output to the user by the first communication device.

4. The apparatus of claim 1, wherein the key exchange protocol is part of a Voice over IP protocol.

5. The apparatus of claim 4, wherein the Voice over IP protocol is Z Real-Time Protocol (ZRTP).

6. The apparatus of claim 5, wherein the confirmation information is a Short Authorization String (SAS).

7. The apparatus of claim 1, wherein the apparatus is a gateway and wherein the first communication device is a telephone.

8. The apparatus of claim 1, wherein the apparatus is configured to use a first communication protocol with the second apparatus and a different, second communication protocol with the first communication device.

9. A method performed by at least one processor of an apparatus, comprising:
obtaining confirmation information to be displayed to a user through a key exchange protocol performed with a second apparatus; and
sending to a first communication device connected to the apparatus, the confirmation as information to be rendered by the first communication device.

10. The method of claim 9, wherein the confirmation information is sent as a caller ID for display on a display of the first communication device.

11. The method of claim 9, wherein the key exchange protocol is part of a Voice over IP protocol.

12. The method of claim 11, wherein the Voice over IP protocol is Z Real-Time Protocol (ZRTP).

13. The method of claim 9, wherein the apparatus is a gateway connected to the first communication device.

14. Computer program comprising program code instructions executable by a processor for implementing the steps of a method according to at least one of claims 9 to 13.

15. A non-transitory computer readable medium storing program code instructions that, when executed by at least one processor, implement the steps of a method according to at least one of claims 9 to 13.
